# EUROPÄISCHE PATENTANMELDUNG

(11) **EP 0 972 801 A1**
(43) Veröffentlichungstag der Anmeldung: **19.01.2000**
(21) Anmeldenummer: 98890209.4
(22) Anmeldetag: 16.07.1998
(51) Int. Cl.: C08L 23/10

(54) **Kunststoff zur Herstellung von Heisswasser-Installationen**

(71) Anmelder: KE-KELIT Kunststoffwerk Gesellschaft m.b.H., A-4017 Linz (AT)
(72) Erfinder: Rametsteiner, Karl, 4040 Linz (AT)
(74) Vertreter: Hübscher, Helmut, Dipl.-Ing.

(57) **Zusammenfassung**

Ein Kunststoff zur Herstellung von Heißwasser-Installationen besteht aus Äthylenpolymer, Polypropylenpolymer und Butenpolymer. Um optimale Werte zu erreichen, ist das Polymergemisch aus 12 bis 18 % Polybuten und 82 bis 88 % Polypropylenrandomcopolymer zusammengesetzt, wobei letzteres aus 90 bis 95 % Propylen und 5 bis 10 % Äthylen gebildet ist.

## Beschreibung

Die Erfindung bezieht sich auf einen Kunststoff zur Herstellung von Heißwasser-Installationen, bestehend aus Äthylenpolymer, Polypropylenpolymer und Butenpolymer.

Ein solches Polymergemisch ist zur Herstellung von Heißwasser-Installationen bereits vorgeschlagen worden, wobei das Polymergemisch aus 1 bis 20 Gew.% Äthylenpolymer, 5 bis 75 Gew.% Propylenpolymer und 5 bis 75 Gew.% Butenpolymer bestehen sollte. Aus solchen Polymergemischen hergestellte Heißwasser-Installationen wären geeignet, die Ansprüche einer Heißwasser-Installation in bezug auf Wärmebeständigkeit, Schlagfestigkeit, Schweißbarkeit und Alterungsbeständigkeit zu erfüllen. Es hat sich nun gezeigt, daß nur eine ganz bestimmte Zusammensetzung des Polymergemisches wirklich befriedigende Eigenschaften ergibt bzw. für den besonderen Zweck optimale Ergebnisse liefert

Diese Aufgabe wird durch die Erfindung erfüllt, die sich dadurch auszeichnet, daß sich das Polymergemisch aus 12 bis 18 % Polybuten und 82 bis 88 % Polypropylenrandomcopolymer zusammensetzt, wobei letzteres aus 90 bis 95 % Propylen und 5 bis 10 % Äthylen gebildet ist.

Es hat sich nun gezeigt, daß das erfindungsgemäße Polymergemisch mit einer handelsüblichen, dem Stand der Technik entsprechenden Stabilisierung eine überraschend hohe Zeitstandfestigkeit aufweist. Dabei wäre zu erwarten, daß mit steigendem Polybutengehalt die Schlagzugfestigkeit ebenfalls verbessert würde. Überraschenderweise liegen die betreffenden Werte bei 14 bis 18 % Polybutengehalt am höchsten. Analog dazu ist die Zugfestigkeit, die zur Vermeidung des Durchhängens längerer Leitungen wünschenswert ist, im beanspruchten Polybutengehalt von 12 bis 18 % höher als bei niedrigerem oder auch höherem Anteil.

### Ausführungsbeispiel:

In einem Polymerkneter wurden bei 220 °C 85 Gewichtsteile werkmäßig stabilisiertes Polypropylenrandomcopolymer (BEC 6006 der Firma PCD Austria) mit 8 % Äthylengehalt und 15 Gewichtsteilen Polybuten (PB 4137 der Firma Shell Chemical USA) homogen verknetet und auf bekannte Weise granuliert. Es ergab sich ein Granulat der Dichte 0,903 und mit einem Schmelzindex (MFI 230/2, 16) von 0,35. Detailuntersuchungen zeigten ein homogenes zweiphasiges Blend. Es konnte keine negative Beeinflussung der Kristallisation der beiden Phasen beobachtet werden. Aus diesem Granulat wurden mittels eines Extruders Rohre der Dimension 20 x 3,4 hergestellt und dazu passende Schweißformteile spritzgußtechnisch gefertigt.

Eine aus diesen Rohren und Formteilen hergestellte Installation zeigte im Zeitstands-Innendruckversuch nach DIN 53759 bei 95 °C Prüftemperatur und 4 MPa Vergleichsspannung eine Standzeit von über 2000 h, wogegen das gleiche Polypropylencopolymer ohne Polybutanbeimischung laut DIN 8078 bei gleicher Belastung lediglich 100 h beständig sein sollte. Darüber hinaus bestand keine Neigung zur Schrumpfung, wie sie bei Polybutenhalbzeugen in den ersten zwei Lagerungswochen beobachtet wurde, eine Tatsache, die bei einem Polybutangehalt von über 20 % bereits wieder auftritt. Die Kälteschlagfestigkeit erreicht bei einem Polybutenanteil zwischen 12 bis 18 % im Gesamtgewicht ein Optimum, das beträchtlich über jenem von Polyproylencopolymer liegt.

## Patentansprüche

1. Kunststoff zur Herstellung von Heißwasser-Installationen, bestehend aus Äthylenpolymer, Polypropylenpolymer und Butenpolymer, dadurch gekennzeichnet, daß sich das Polymergemisch aus 12 bis 18 % Polybuten und 82 bis 88 % Polypropylenrandomcopolymer zusammensetzt, wobei letzteres aus 90 bis 95 % Propylen und 5 bis 10 % Äthylen gebildet ist.
